# EUROPEAN PATENT SPECIFICATION

(11) **EP 4 064 220 B1**
(45) Date of publication and mention of the grant of the patent: **17.12.2025**
(21) Application number: 22164220.0
(22) Date of filing: 24.03.2022
(51) Int. Cl.: G06V 20/58, G08G 1/01, G08G 1/09

(54) **METHOD, SYSTEM AND DEVICE FOR DETECTING TRAFFIC LIGHT FOR VEHICLE**
VERFAHREN, SYSTEM UND VORRICHTUNG ZURDETEKTION VON VERKEHRAMPELN FÜR FAHRZEUGE
PROCÉDÉ, SYSTÈME ET DISPOSITIF DE DÉTECTION DE FEU DE CIRCULATION POUR VÉHICULE

(30) Priority: 26.03.2021 CN 202110323055
(43) Date of publication of application: 28.09.2022
(73) Proprietor: Bayerische Motoren Werke Aktiengesellschaft, 80809 München (DE)
(72) Inventor: Yuan, Jenny, Shanghai, 224500 (CN); Li, Qianshan, Shanghai, 200020 (CN); Lu, Gary, Shanghai, 200120 (CN)

(56) References cited:
- CN-B- 105 185 140
- JANG CHULHOON ET AL: "Traffic light recognition exploiting map and localization at every stage", EXPERT SYSTEMS WITH APPLICATIONS, ELSEVIER, AMSTERDAM, NL, vol. 88, 12 July 2017 (2017-07-12), pages 290 - 304, XP085147243, ISSN: 0957-4174, DOI: 10.1016/J.ESWA.2017.07.003
- CHOI KYOUNGTAEK ET AL: "Detection-Verification-Cascade-Based Low-Cost Precise Vehicle Positioning Exploiting Extended Digital Map", IEEE ACCESS, IEEE, USA, vol. 9, 8 January 2021 (2021-01-08), pages 11065 - 11079, XP011832653, DOI: 10.1109/ACCESS.2021.3050109
- OXFORD TECHNICAL SOLUTIONS: "GNSS-aided inertial measurement systems", 1 January 2018 (2018-01-01), pages 1 - 143, XP093233697, Retrieved from the Internet <URL:https://www.oxts.com/app/uploads/2018/02/rtman.pdf>
- LANGENBERG TRISTAN ET AL: "Deep Metadata Fusion for Traffic Light to Lane Assignment", IEEE ROBOTICS AND AUTOMATION LETTERS, IEEE, vol. 4, no. 2, 1 April 2019 (2019-04-01), pages 973 - 980, XP011709426, [retrieved on 20190211], DOI: 10.1109/LRA.2019.2893446

## Description

### TECHNICAL FIELD

The present disclosure relates to methods, systems and devices for detecting a traffic light for a vehicle.

### BACKGROUND ART

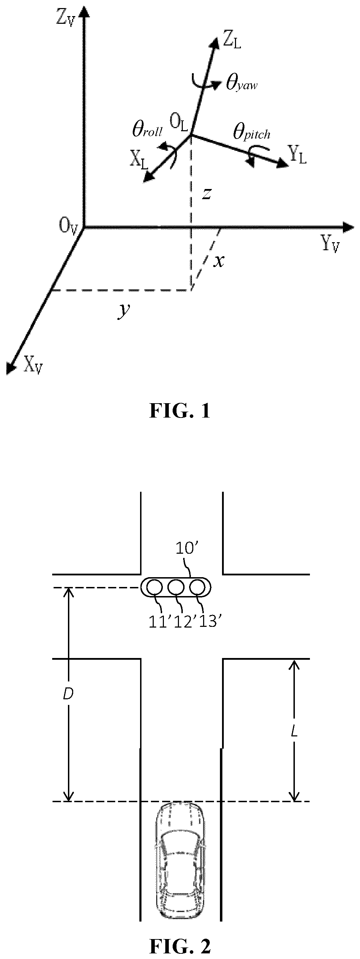

A pose of a vehicle refers to a position and a posture of a vehicle body coordinate system (for example, reference may be made to a definition of SAE) of the vehicle relative to a global coordinate system. Various sensors are usually mounted on an autonomous vehicle, and data acquired by each sensor is generated in its own coordinate system. For simplicity, it is assumed herein that data acquired by each sensor is data that has been converted into the vehicle body coordinate system. That is, it is assumed that the vehicle and sensors mounted thereon each use the vehicle body coordinate system. At the same time, it is assumed that a high-definition map uses the global coordinate system. Pose information of a vehicle is described below with reference to FIG. 1.

Referring to FIG. 1, an O_{V}-X_{V}Y_{V}Z_{V} coordinate system is the global coordinate system, and an O_{L} -X_{L}Y_{L}Z_{L} coordinate system is the vehicle body coordinate system. A position of the vehicle relative to the global coordinate system O_{V}-X_{V}Y_{V}Z_{V}, for example, (*x, y, z*)*,* corresponds to coordinates of the origin O_{L} in the O_{V}-X_{V}Y_{V}Z_{V} coordinate system. A posture of the vehicle is a rotation angle of the O_{L}-X_{L}Y_{L}Z_{L} coordinate system relative to the O_{V}-X_{V}Y_{V}Z_{V} coordinate system, for example, (*θᵣₒₗₗ*, *θ_{pitch}*, *θ_{yaw}*). Therefore, usually a pose of a vehicle in a three-dimensional ("3D") environment may be expressed in the form of (*x, y, z, θᵣₒₗₗ*, *θ_{pitch}*, *θ_{yaw}*).

There are methods for locating a vehicle to acquire pose information in the prior art.

"Traffic light recognition exploiting map and localization at every stage" (JANG CHULHOON ET AL, EXPERT SYSTEMS WITH APPLICATIONS, ELSEVIER, AMSTERDAM, NL, vol. 88, 12 July 2017 (2017-07-12), pages 290-304, XP085147243, ISSN: 0957-4174, DOI: 10.1016/J.ESWA.2017.07.003) discloses the following contents: traffic light recognition is being intensively researched for the purpose of reducing traffic accidents at intersections and realizing autonomous driving; however, conventional vision-based approaches have several limitations due to full image scanning, always-on operation, various different types of traffic lights, and complex driving environments; in particular, it might be impossible to recognize a relevant traffic light among multiple traffic lights at multiple intersections; to overcome such limitations, we propose an effective architecture that integrates a vision system with an accurate positioning system and an extended digital map; the recognition process is divided into four stages and we suggest an extended methodology for each stage; these stages are: ROI generation, detection, classification, and tracking; the 3D positions of traffic lights and slope information obtained from an extended digital map enable ROIs to be generated accurately, even on slanted roads, while independent design and implementation of individual recognition modules for detection and classification allow for selection according to the type of traffic light face; such a modular architecture gives the system simplicity, flexibility, and maintainable algorithms; in addition, adaptive tracking that exploits the distance to traffic lights allows for seamless state estimation through smooth data association when measurements change from long to short ranges; evaluation of the proposed system occurred at six test sites and utilized two different types of traffic lights, seven states, sloped roads, and various environmental complexities; the experimental results show that the proposed system can recognize traffic lights with 98.68% precision, 92.73% recall, and 95.52% accuracy in the 10.02-81.21m range.

CN105185140B discloses an auxiliary driving method and system. The method comprises: detecting the distance between the position of a vehicle and that of a traffic light, and if the distance is less than a first threshold, obtaining an image of the front of the vehicle; analyzing the image and judging whether the traffic light is in the image; if the traffic light is in the image, extracting related information of the traffic light including the color of the traffic light; and responding to a detected first event which happens, and prompting a driver through a vibration device of a steering wheel of the vehicle or voice, wherein the first event is that the color of the traffic light changes from red to green.

"Detection-Verification-Cascade-Based Low-Cost Precise Vehicle Positioning Exploiting Extended Digital Map" (CHOI KYOUNGTAEK ET AL, IEEE ACCESS, IEEE, USA, vol. 9, 8 January 2021 (2021-01-08), pages 11065-11079, XP011832653, DOI: 10.1109/ACCESS.2021.3050109) proposes a map-matching based precise positioning system for highways. The proposed system fuses multiple sensors such as a camera, conventional GPS, and vehicle motion sensors widely adapted in mass-produced vehicles. While conventional map-matching based systems consume a large amount of computation because of the landmark detection, the proposed system achieves both precise positioning and small computations by introducing a detection-verification-cascade strategy: the proposed system generates vehicle position candidates per lane by utilizing lane endpoints detectable with small computation, and then it selects the candidate on an ego-lane by verifying the existence of road signs within the region of interest generated by a map and each candidate. To reduce the computation further, the proposed system adapts an extended Kalman filter (EKF) as a positioning filter instead of a particle filter. As the noise distribution of the EKF is limited to a unimodal, the proposed system maintains multiple EKFs to track the candidates for each lane until the ego lane is identified. After ego-lane identification, the system leaves only one EKF to track the candidate on an ego-lane. The proposed system achieves 0.17m average positioning error in highway situations and it takes about 53ms to process the whole procedure from landmark detection to position estimation in low-end hardware equipped with a cortex-A9 CPU whose clock is 1.0GHz.

"Oxford Technical Solutions: 'GNSS-aided inertial measurement systems‴ (1 January 2018 (2018-01-01), pages 1-143, XP093233697, Retrieved from the Internet: URL: https://www.oxts.com/app/uploads/2018/02/rtman.pdf) discloses that the localization system RT3002 of Oxford Technical Solutions acquires roll and pitch. "Deep Metadata Fusion for Traffic Light to Lane Assignment" (LANGENBERG TRISTAN ET AL, IEEE ROBOTICS AND AUTOMATION LETTERS, IEEE, vol. 4, no. 2, 1 April 2019 (2019-04-01), pages 973-980) discloses a deep metadata fusion approach that connects image data and heterogeneous metadata inside a Convolutional Neural Network (CNN). This approach enables us to assign all relevant traffic lights to their associated lanes. To achieve this, a common CNN topology is trained by down-sampled and transformed input images to predict an indication vector. The indication vector contains the column positions of all the relevant traffic lights that are associated with lanes. In parallel, we fuse prepared and adaptively weighted Metadata Feature Maps (MFM) with the convolutional feature map input of a selected convolutional layer. The results are compared to rule-based, only-metadata, and only-vision approaches. In addition, human performance of the traffic light to ego-vehicle lane assignment has been measured by a subjective test.

### CONTENT OF THE DISCLOSURE

One of objects of the present disclosure is to provide methods, systems and devices for detecting a traffic light for a vehicle.

According to a first aspect of the present disclosure, a method for detecting a traffic light for a vehicle is provided. The method includes: acquiring first pose information for the vehicle from a positioning module, , wherein the first pose information includes position information of the vehicle relative to a global coordinate system in a horizontal plane and posture information of the vehicle relative to the global coordinate system in the horizontal plane; acquiring second pose information for a target traffic light from a high-definition map module, wherein the target traffic light is determined according to at least one of a lane in which the vehicle is located or a driving plan of the vehicle; and acquiring an image that presents an environment in front of the vehicle from a camera mounted on the vehicle; determining a position of the target traffic light in the image according to the first pose information and the second pose information; and performing image processing on an image area of the image that is located at the position so as to detect an indication of the target traffic light, wherein the image area is centered on the position of the target traffic light.

In an exemplary embodiment of the present aspect, the method further includes: determining a size of the image area according to the first pose information and the second pose information.

In an exemplary embodiment of the present aspect, the method further includes: in response to a distance between the vehicle and a front intersection being less than a threshold, acquiring the first pose information, the second pose information and the image.

In an exemplary embodiment of the present aspect, determining the position of the target traffic light in the image according to the first pose information and the second pose information includes: according to the first pose information and the second pose information, converting the second pose information into converted pose information that is located in a vehicle body coordinate system; and according to the converted pose information, determining the position of the target traffic light in the image.

In an exemplary embodiment of the present aspect, the second pose information includes 3D position information and 3D posture information of the target traffic light relative to the global coordinate system.

According to a second aspect of the present disclosure, a system for detecting a traffic light for a vehicle is provided. The system includes: a positioning module configured to provide first pose information for the vehicle, wherein the first pose information includes position information of the vehicle relative to a global coordinate system in a horizontal plane and posture information of the vehicle relative to the global coordinate system in the horizontal plane; a high-definition map module configured to provide second pose information for a target traffic light, wherein the target traffic light is determined according to at least one of a lane in which the vehicle is located or a driving plan of the vehicle; a camera mounted on the vehicle and configured to acquire an image that presents an environment in front of the vehicle; and a computing device configured to: acquire the first pose information from the positioning module, acquire the second pose information from the high-definition map module, and acquire the image from the camera; determine a position of the target traffic light in the image according to the first pose information and the second pose information; and perform image processing on an image area of the image that is located at the position so as to detect an indication of the target traffic light, wherein the image area is centered on the position of the target traffic light.

In an exemplary embodiment of the present aspect, the computing device is further configured to: determine a size of the image area according to the first pose information and the second pose information; and determine an area of the image that is centered on the position and has the size as the image area.

In an exemplary embodiment of the present aspect, the computing device is further configured to: in response to a distance between the vehicle and a front intersection being less than a threshold, acquire the first pose information, the second pose information and the image.

In an exemplary embodiment of the present aspect, the computing device is further configured to: according to the first pose information and the second pose information, convert the second pose information into converted pose information that is located in a vehicle body coordinate system; and according to the converted pose information, determine the position of the target traffic light in the image.

In an exemplary embodiment of the present aspect, the second pose information includes 3D position information and 3D posture information of the target traffic light relative to the global coordinate system.

According to a third aspect of the present disclosure, a device for detecting a traffic light for a vehicle is provided. The device includes: one or more processors; and one or more memories configured to store a series of computer-executable instructions, wherein, when the series of computer-executable instructions are executed by the one or more processors, the one or more processors are caused to perform the above-mentioned methods.

In an exemplary embodiment of the present aspect, the device is mounted on the vehicle.

According to a third aspect of the present disclosure, a non-transitory computer readable storage medium is provided. The non-transitory computer readable storage medium has a series of computer executable instructions stored thereon that, when executed by one or more computing devices, cause the one or more computing devices to perform the above-mentioned method.

Other features of the present disclosure and advantages thereof will become apparent from the following detailed description of exemplary embodiments of the present disclosure with reference to the accompanying drawings.

### BRIEF DESCRIPTION OF THE DRAWINGS

The accompanying drawings, which form a part of the description, illustrate embodiments of the present disclosure and together with the description serve to explain the principles of the present disclosure.

The present disclosure may be more clearly understood from the following detailed description with reference to the accompanying drawings, wherein:
FIG. 1 is a schematic diagram of a 3D global coordinate system and a 3D vehicle body coordinate system.
FIG. 2 is a schematic diagram of a vehicle approaching an intersection.
FIG. 3A to FIG. 3D are schematic diagrams of states of a traffic light in images presenting an environment in front of the vehicle acquired by a camera in various situations.
FIG. 4 is a flowchart of a method for detecting a traffic light for a vehicle according to an embodiment of the present disclosure.
FIG. 5 is a block diagram of a system for verifying pose information of a vehicle according to another embodiment of the present disclosure.
FIG. 6 is an exemplary block diagram schematically illustrating a general hardware system applicable to a device for detecting a traffic light for a vehicle of the present disclosure according to an embodiment of the present disclosure.

Note that, in the embodiments to be described below, the same reference number is used to denote the same parts or parts having the same function in different figures, and repeated description thereof may be omitted. In some instances, similar numerals and letters are used to denote similar items, so once an item is defined in one figure, it does not require further discussion in subsequent figures.

Although aspects of the present disclosure will be described with reference to the accompanying drawings, the methods, systems, and devices are merely illustrative examples, and the scope of the present invention is not limited by these aspects, but is only defined by the appended claims and their equivalents. Various elements may be omitted or be replaced by equivalent elements. Additionally, the steps may be performed in an order different from that described in this disclosure. Furthermore, various elements may be combined in various ways. It is also important that, as technology develops, many of the elements described may be replaced by equivalent elements that appear after the present disclosure.

### EMBODIMENTS

Embodiments of the present disclosure will be described below with reference to the drawings, in which several embodiments of the present disclosure are shown. It should be understood, however, that the present disclosure may be implemented in many different ways, and is not limited to the example embodiments described below. In fact, the embodiments described hereinafter are intended to make the present disclosure to be more complete and to adequately explain the scope of the present disclosure to a person skilled in the art. It should also be understood that, the embodiments disclosed herein can be combined in various ways to provide many additional embodiments.

It should be understood that, the wording in the present disclosure is only used for describing particular embodiments and is not intended to limit the present disclosure. All the terms used in the specification (including technical and scientific terms) have the meanings as normally understood by a person skilled in the art, unless otherwise defined. For the sake of conciseness and/or clarity, well-known functions or constructions may not be described in detail.

The term "A or B" used through the present disclosure refers to "A and B" and "A or B" rather than meaning that A and B are exclusive, unless otherwise specified.

The term "exemplary", as used herein, means "serving as an example, instance, or illustration", instead of a "model" to be exactly reproduced. Any implementation described herein as exemplary is not necessarily to be construed as preferred or advantageous over other implementations. Furthermore, there is no intention for the present disclosure to be bound by any expressed or implied theory presented in the part of technical field, the background art, the content of the disclosure or the embodiments.

Herein, certain terminology, such as the terms "first", "second" and the like, may also be used in the following specification for the purpose of reference only, , and are thus not intended to be limiting. For example, the terms "first", "second" and other such numerical terms referring to structures or elements do not imply a sequence or order unless clearly indicated by the context unless it is clearly dictated in the context.

Further, it should be noted that, the terms "comprise", "include", "have" and any other variants, as used herein, specify the presence of stated features, unity, steps, operations, elements, and/or components, but do not preclude the presence or addition of one or more other features, unities, steps, operations, elements and/or components, and/or groups thereof.

An autonomous vehicle needs to perform traffic light detection at an intersection in order to formulate a driving strategy of the vehicle at the intersection. For example, if the traffic light at the intersection is red, it is needed for the vehicle to stop and wait. For another example, if the present vehicle intends to turn left, and the green light for going straight is on but the left turn indicator is red, the vehicle also needs to stop and wait. In a method for detecting a traffic light in the prior art, usually an entire image of the front of an autonomous vehicle captured by a camera mounted on the autonomous vehicle is subjected to image processing, so as to detect a traffic light from the image, and to recognize the indication of the traffic light. In a case of multiple lanes, it is common to provide a traffic light for each lane. In this case, after the traffic lights are detected by image processing, it is necessary to extract high-definition map (HD MAP) information of the intersection from a HD MAP, and then the traffic lights in the image are compared with traffic lights in the HD MAP information, so as to identify that a certain traffic light in the image corresponds to which traffic light in the HD MAP information, and determine that the certain traffic light in the image is used to indicate which lane. In order to make traffic light detection easier, the present disclosure provides methods, systems and devices for detecting a traffic light for a vehicle.

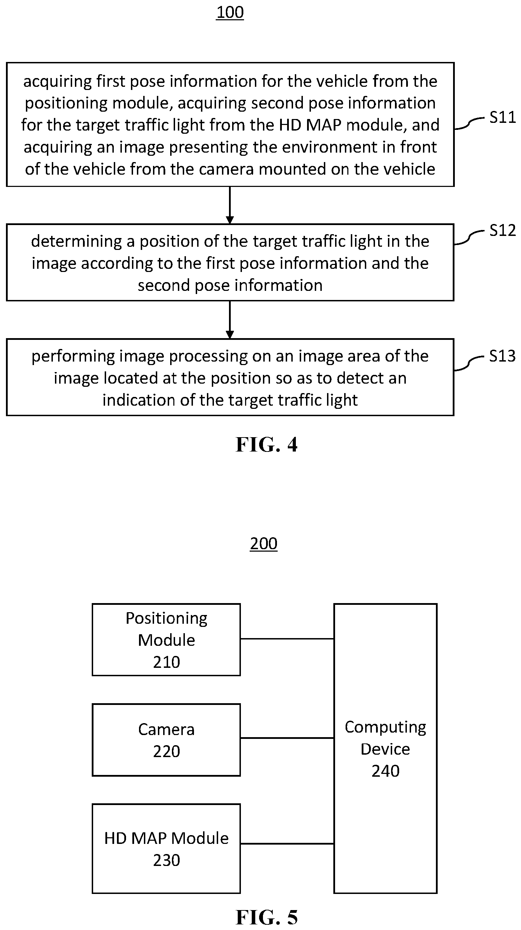

FIG. 4 is a flowchart schematically illustrating a method 100 for detecting a traffic light for a vehicle according to an embodiment of the present disclosure. The method 100 includes steps S11 to S13 as described below. FIG. 5 is a flowchart schematically illustrating a system 200 for detecting a traffic light for a vehicle according to one embodiment of the present disclosure. The system 200 includes a positioning module 210, a camera 220, a high-definition map (HD MAP) module 230, and a computing device 240. The positioning module 210, the HD MAP module 230, and the computing device 240 may be modules mounted on the vehicle, or may be remote modules. Any one of the positioning module 210, the HD MAP module 230, and the computing device 240 may be any device, apparatus, software and/or hardware module capable of providing corresponding functions.

The positioning module 210 provides first pose information for the vehicle. The positioning module 210 may be, for example, a positioning module based on GPS data, LiDAR data, or the like. The first pose information indicates a position and a posture of the vehicle relative to a global coordinate system. The HD MAP module 230 provides second pose information for a target traffic light. The second pose information indicates a position and a posture of the target traffic light relative to the global coordinate system. In an embodiment, the first and second pose information may include 3D position information (*x, y, z*)*,* as described above. In an embodiment, when 3D positioning is not required, the first and second pose information may only include two-dimensional ("2D") position information (*x, y*)*,* that is, may only include a position of the vehicle or the target traffic light relative to the global coordinate system in a horizontal plane, which does not include a dimension in the Z direction. In an embodiment, the first and second pose information may further include 3D posture information (*θᵣₒₗₗ*, *θ_{pitch}*, *θ_{yaw}*) of the vehicle, which is rotation angles of the vehicle and the target traffic light relative to the global coordinate system. In an embodiment, when 3D positioning is not required, the first and second pose information may only include 2D posture information, which is a rotation angle (*θ_{yaw}*) of the vehicle relative to the global coordinate system in the horizontal plane. Each variable in the first and second pose information (*x, y, z, θᵣₒₗₗ*, *θ_{pitch}*, *θ_{yaw}*) may have a Gaussian distribution with mean and variance. In this case, a position indicated by pose information herein may refer to a mean value of position variables, and a posture indicated by the pose information herein may refer to a mean value of posture variables.

The camera 220 is mounted on the vehicle and acquires an image that presents an environment in front of the vehicle. There may be only one camera 220 positioned towards the front of the vehicle to acquire an image that presents the environment in front of the vehicle. Alternatively, there may be a plurality of cameras 220 including, for example, two cameras positioned toward the left front and the right front of the vehicle, respectively, or three cameras positioned toward the front, the left front, and the right front of the vehicle, respectively. By combining images captured by these two or three cameras, an image of the environment in front of the vehicle is acquired. Any camera included in the camera(s) 220 may be a camera with a larger viewing angle (e.g., a camera with a wide-angle lens or a fisheye lens), or may be a camera with a normal viewing angle (e.g., a camera with a standard lens). Any camera included in the camera(s) 220 may be installed on the top portion of the vehicle, the head portion of the vehicle, a side portion of the vehicle, or other suitable portion of the vehicle, which is not limited in the present disclosure, as long as the camera 220 may acquire an image presenting the environment in front of the vehicle.

The embodiments of the present disclosure will be described below with reference to steps of the method 100 and various parts included in the system 200.

In step S11, the computing device 240 acquires the first pose information for the vehicle from the positioning module 210, acquires the second pose information for the target traffic light from the HD MAP module 230, and acquires an image presenting the environment in front of the vehicle from the camera 220.

The target traffic light is a traffic light that needs to be detected. The target traffic light is determined according to information of a lane on which the vehicle is located, and/or according to a driving plan of the vehicle. When a road includes multiple lanes (which usually refer to lanes in the same driving direction), it is possible to provide respective traffic lights for respective lanes to show traffic indication of a corresponding lane. The vehicle usually travels on one of the multiple lanes, so the target traffic light to be detected by the vehicle is usually a traffic light corresponding to the current lane. In some cases, according to the driving plan of the vehicle, the vehicle may need to change to other lanes, and the target traffic light to be detected by the vehicle may be a traffic light corresponding to a target lane for changing. In some cases, according to the driving plan of the vehicle, the vehicle may need to turn left (or right), and the target traffic light to be detected by the vehicle may be a traffic light showing left-turn (or right-turn) traffic indication. As shown in FIG. 2, a traffic light 10' usually includes signal lights 11', 12' and 13' with three colors of red, yellow and green. When referring to "traffic lights" herein, it may refer to either the traffic light 10' or the signal lights 11', 12', 13' shown in FIG. 2.

In some embodiments, the computing device 240 acquires the first pose information, the second pose information, and the image in response to a distance between the vehicle and an intersection ahead being less than a threshold, i.e., the vehicle is close to the intersection. The computing device 240 may determine whether the vehicle is close to the intersection according to positioning information of the vehicle and the HD MAP. For example, according to a position in the HD MAP indicated by the positioning information of the vehicle, as shown in FIG. 2, if there is an intersection at a predetermined distance (corresponding to the above-mentioned threshold) in front of the position (it will be appreciated that the term "in front of the vehicle" herein refers to a front on the lane in which the vehicle travels along the driving direction), that is, in response to a distance L between the vehicle and the intersection ahead being smaller than the threshold (e.g., 50 meters), it is determined that the vehicle is close to the intersection.

In step S12, the computing device 240 determines a position of the target traffic light in the image according to the first pose information and the second pose information.

It will be appreciated that the position of the traffic light in the image captured by the vehicle-mounted camera 220 is related to both a distance D between the vehicle and the traffic light, and a relative angle between the vehicle and the traffic light, which may be indicated by the first pose information and the second pose information. In some embodiments, the computing device 240 may convert the second pose information for the traffic light into converted pose information located in the vehicle body coordinate system according to the first pose information and the second pose information, and determine the position of the target traffic light in the image according to the converted pose information.

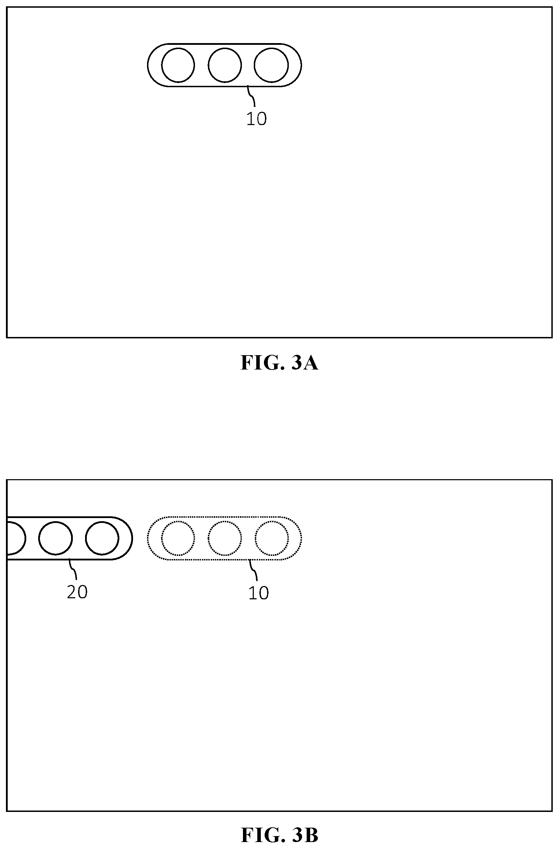

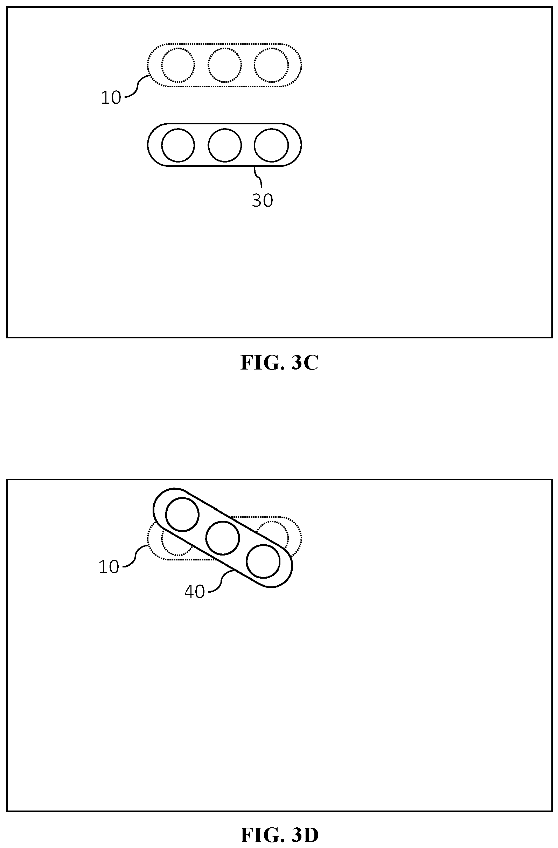

For example, as shown in FIG. 2, when the vehicle is facing straight the traffic light 10' at the intersection ahead, an image provided by the camera 220 may be an image shown in FIG. 3A. In this image, the position of the target traffic light in the image is within an area 10. Compared to a case shown in FIG. 2, when the vehicle has a displacement to the right in the Y_{V} direction, or when the vehicle has a yaw angle *θ_{yaw}* to the right, an image provided by the camera 220 may be an image shown in FIG. 3B. In this image, an area 20 where the target traffic light is located is closer to a left side of the image than the area 10. Compared with the case shown in FIG. 2, when the vehicle has an upward displacement in the Z_{V} direction, or when the vehicle has an upward pitch angle *θ_{pitch}*, an image provided by the camera 220 may be an image shown in FIG. 3C. In this image, an area 30 where the target traffic light is located is closer to a lower side of the image than the area 10. Compared to the case shown in FIG. 2, when the vehicle has a roll angle *θᵣₒₗₗ* in the counterclockwise direction, an image provided by the camera 220 may be an image shown in FIG. 3D. In this image, an area 40 where the target traffic light is located has an angle that is turned in a clockwise direction than the area 10.

In step S13, the computing device 240 performs image processing on an image area of the image located at the position, so as to detect the indication of the target traffic light. A size of the image area that needs to be processed is related to the distance and relative angle between the vehicle and the traffic light. For example, when the vehicle is far away from the traffic light, a size of the image area that needs to be processed is smaller; and when the vehicle is closer to the traffic light, a size of the image area that needs to be processed is larger. For another example, when the vehicle is facing straight the traffic light, that is, the relative angle between the vehicle and the traffic light is 0 degree, a size of the image area that needs to be processed is larger; and when the relative angle between the vehicle and the traffic light (such as relative angles on the X_{V}O_{V}Y_{V} plane and the X_{V}O_{V}Z_{V} plane) is not 0 degree, a size of the image area that needs to be processed is smaller.

Therefore, the computing device 240 may determine a size of the image area according to the first pose information and the second pose information; and determine an area of the image that is centered on the position of the traffic light and has the size as the image area. When the traffic light refers to a single signal light, the position of the traffic light in step S13 is the center of an area corresponding to each signal light within the area 10, 20, 30 or 40.

The computing device 240 may determine pose information of the traffic light relative to the vehicle according to the first pose information and the second pose information, for example, a 3D pose (*xl, yl, zl, θlᵣₒₗₗ*, *θl_{pitch}*, *θl_{yaw}*) or a 2D pose *(xl, yl, θl_{yaw}*) of the traffic light in the vehicle body coordinate system. Based on calibrated information, a size of an image area that needs to be processed of the target traffic light having the 3D pose *(xl, yl , zl, θlᵣₒₗₗ, θl_{pitch}*, *θl_{yaw}*) or the 2D pose *(xl, yl*, *θl_{yaw}*) in the vehicle body coordinate system may be determined, by using an image measurement technology. The calibrated information may be, for example, a size of an area (for example, it may be expressed as the number of pixels) occupied by the target traffic light in an image with a specific resolution captured by the camera mounted on the vehicle when a distance between the vehicle and the target traffic light is a specific distance. Then, an area that centered on the position of the traffic light and has the size in the image may be determined as the image area, and image processing is performed on the image area with a machine vision technology, so as to detect the indication of the target traffic light, such as allowing or forbidding passage.

The present disclosure also provides a device for detecting a traffic light for a vehicle (which may also be referred to as a "system for detecting a traffic light for a vehicle" or a "vehicle for detecting a traffic light for a vehicle"). The device for detecting a traffic light for a vehicle includes one or more processors and one or more memories. The one or more processors are configured to perform the methods described above in accordance with embodiments of the present disclosure. The memory is configured to store data, programs and the like required by the processor. The program includes a series of computer-executable instructions required to cause the processor to perform the methods described above in accordance with embodiments of the present disclosure. The data includes the first pose information provided by the positioning module, the second pose information provided by the HD MAP, the image that presents the environment in front of the vehicle provided by the camera, and input, output and intermediate results, etc., of each step in the procedure of processing the image described above. The one or more memories may be configured so that one memory is used to store one item of the above contents, be configured so that multiple memories are used to collectively store one item of the above contents, or may be configured so that one memory is used to store more than one item of the above contents.

It will be appreciated that the one or more memories may be local memories (such as memories mounted on the device (or vehicle)), may be cloud memories (e.g., a memory of a cloud server), or may include both local memories and cloud memories. Similarly, the one or more of the processors may be local processors (such as those mounted on the device (or vehicle)), may be cloud processors (such as a processor of a cloud server), or may include both local processors and cloud processors.

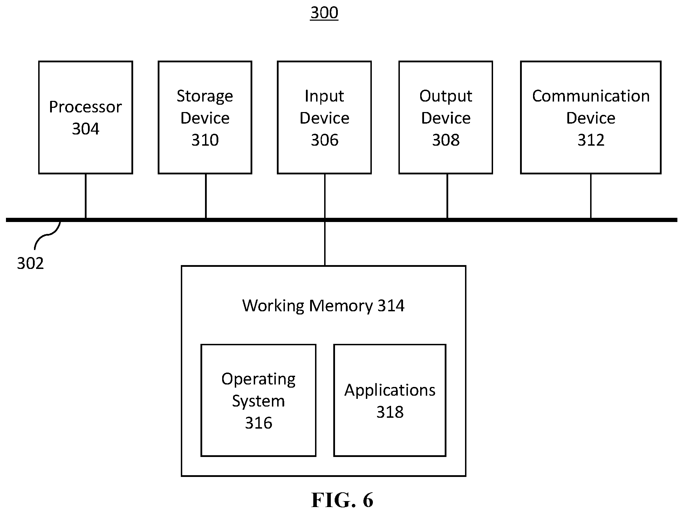

FIG. 6 is a block diagram of an exemplary configuration in which a computing device 300 according to an embodiment of the present disclosure may be implemented. The computing device 300 will now be described with reference to FIG. 6, which may also be an example of a hardware device applicable to aspects of the present disclosure. The computing device 300 may be any machine configured to perform processing and/or computation, which may be, but is not limited to, a workstation, server, desktop computer, laptop computer, tablet computer, personal data assistant, smartphone, car computer, or any combination thereof. The computing device 240 in the system for detecting a traffic light for a vehicle according to an embodiment of the present disclosure described above may be implemented in whole or at least in part by the computing device 300 or a similar device or system.

The computing device 300 may include elements connected to or in communication with bus 302, possibly via one or more interfaces. For example, the computing device 300 may include a bus 302, as well as one or more processors 304, one or more input devices 306, and one or more output devices 308. The one or more processors 304 may be any type of processor, which may include, but is not limited to, one or more general purpose processors and/or one or more special purpose processors (e.g., special processing chips). The input device 306 may be any type of device that may input information to a computing device, and may include, but is not limited to, a camera, LiDAR sensor, mouse, keyboard, touch screen, microphone, and/or remote control. The output device 308 may be any type of device that may present information, and may include, but is not limited to, a display, speaker, video/audio output terminal, vibrator, and/or printer.

The computing device 300 may also include or be connected to a non-transitory storage device 310. The non-transitory storage device 310 may be any storage device that is non-transitory and that enables data storage, and may include, but is not limited to, a magnetic disk drive, optical storage device, solid-state memory, floppy disk, hard disk, tape or any other magnetic media, optical disk or any other optical media, ROM (read only memory), RAM (random access memory), cache memory, and/or any other memory chip/chipset, and/or any other medium from which a computer may read data, instruction and/or code. The non-transitory storage device 310 may be detached from the interface. The non-transitory storage device 310 may have data/instruction/code for implementing the methods, steps and processes described above. One or more of the one or more memories described above may be implemented by the non-transitory storage device 310.

The computing device 300 may also include a communication device 312. The communication device 312 may be any type of device or system capable of communicating with external devices and/or with a network, and may include, but is not limited to, a modem, network card, infrared communication device, wireless communication device, and/or chipset, such as a Bluetooth device, 802.11 device, WiFi device, WiMax device, cellular communication device, and/or the like.

The computing device 300 may also be connected to external devices, for example, a GPS receiver, or a sensor for sensing various environmental data, such as an acceleration sensor, wheel speed sensor, gyroscope, and the like. In this manner, the computing device 300 may receive, for example, position data and sensor data indicative of driving conditions of the vehicle. When the computing device 300 is used as an on-vehicle device, it may also be connected to other facilities of the vehicle (e.g., an engine system, wiper, anti-lock braking system, etc.) to control the operation and manipulation of the vehicle.

Additionally, the non-transitory storage device 310 may have map information and software elements so that the processor 304 may perform a route guidance process. Additionally, the output device 308 may include a display for displaying a map, a position marker of the vehicle, and an image indicating driving conditions of the vehicle. The output device 308 may further include a speaker or an interface with headphones for audio guidance.

The bus 302 may include, but is not limited to, an Industry Standard Architecture (ISA) bus, Microchannel Architecture (MCA) bus, Enhanced ISA (EISA) bus, Video Electronics Standards Association (VESA) local bus, and Peripheral Component Interconnect (PCI) bus. In particular, for on-vehicle devices, the bus 302 may also include a controller area network (CAN) bus or other architecture designed for on-vehicle application.

The computing device 300 may also include a working memory 314, which may be any type of working memory that may store instructions and/or data useful for the operation of the processor 304, which may include, but is not limited to, a random-access memory and/or a read-only memory.

Software elements may reside in the working memory 314, and may include, but not limited to, an operating system 316, one or more application programs 318, driver programs, and/or other data and code. Instructions for performing the methods and steps described above may be included in one or more of the application programs 318. An executable code or source code of instructions for the software elements may be stored in a non-transitory computer-readable storage medium, such as the storage device 310 described above, and may be read into the working memory 314 by compilation and/or installation. The executable code or source code of the instructions for the software elements may also be downloaded from a remote location.

It should also be understood that variations may be made according to specific requirements. For example, custom hardware may also be used, and/or particular elements may be implemented in hardware, software, firmware, middleware, microcode, hardware description languages, or any combination thereof. Additionally, connections to other computing devices such as network input/output devices may be employed. For example, some or all of the methods or devices according to embodiments of the present disclosure may be implemented by programming hardware (e.g., Programmable Logic Circuits including Field Programmable Gate Array (FPGA) and/or Programmable Logic Array (PLA)) in assembly language or hardware programming languages (such as VERILOG, VHDL, C++) according to logic and algorithm of the present disclosure.

It should also be understood that components of the computing device 300 may be distributed over a network. For example, some processing may be performed using one processor, while other processing may be performed by another processor remote from the one processor. Other components of the computing device 300 may be similarly distributed. In this way, the computing device 300 may be interpreted as a distributed computing system that performs processing in multiple locations.

The method, system and device for detecting a traffic light of a vehicle according to the present disclosure do not require image processing of the entire image captured by the vehicle to detect the traffic light, but only need to perform image processing on one image area at an approximate position acquired according to the above method, which is sufficient to detect the indication of the traffic light, thereby reducing the computational complexity of image processing. In addition, since the correspondence between each image area in the image and each traffic light in the HD MAP is known, it is no longer necessary to match an area of the traffic light in the image with the HD MAP to determine that the traffic light provides the indication for which lane, thereby further reducing the computational complexity of traffic light detection.

## Claims

1. A method for detecting a traffic light for a vehicle, comprising:
acquiring a first pose information for the vehicle from a positioning module, wherein the first pose information includes position information of the vehicle relative to a global coordinate system in a horizontal plane and posture information of the vehicle relative to the global coordinate system in the horizontal plane; acquiring a second pose information for a target traffic light from a high-definition map module, wherein the target traffic light is determined according to at least one of a lane in which the vehicle is located or a driving plan of the vehicle; and acquiring an image that presents an environment in front of the vehicle from a camera mounted on the vehicle;
determining a position of the target traffic light in the image according to the first pose information and the second pose information; and
performing image processing on an image area of the image that is located at the position so as to detect an indication of the target traffic light, wherein the image area is centered on the position of the target traffic light.

2. The method according to claim 1, further comprising:
determining a size of the image area according to the first pose information and the second pose information.

3. The method according to claim 1, further comprising:
in response to a distance between the vehicle and a front intersection being less than a threshold, acquiring the first pose information, the second pose information and the image.

4. The method according to claim 1, wherein determining the position of the target traffic light in the image according to the first pose information and the second pose information comprises:
according to the first pose information and the second pose information, converting the second pose information into a converted pose information that is located in a vehicle body coordinate system; and
according to the converted pose information, determining the position of the target traffic light in the image.

5. The method according to claim 1, wherein the second pose information includes 3D position information and 3D posture information of the target traffic light relative to the global coordinate system.

6. A system for detecting a traffic light for a vehicle, comprising:
a positioning module configured to provide a first pose information for the vehicle, wherein the first pose information includes position information of the vehicle relative to a global coordinate system in a horizontal plane and posture information of the vehicle relative to the global coordinate system in the horizontal plane;
a high-definition map module configured to provide a second pose information for a target traffic light, wherein the target traffic light is determined according to at least one of a lane in which the vehicle is located or a driving plan of the vehicle;
a camera mounted on the vehicle and configured to acquire an image that presents an environment in front of the vehicle; and
a computing device configured to:
acquire the first pose information from the positioning module, acquiring the second pose information from the high-definition map module, and acquiring the image from the camera;
determine a position of the target traffic light in the image according to the first pose information and the second pose information; and
perform image processing on an image area of the image that is located at the position so as to detect an indication of the target traffic light, wherein the image area is centered on the position of the target traffic light.

7. The system according to claim 6, wherein the computing device is further configured to:
determine a size of the image area according to the first pose information and the second pose information; and
determine an area of the image that is centered on the position and has the size as the image area.

8. The system according to claim 6, wherein the computing device is further configured to:
in response to a distance between the vehicle and a front intersection being less than a threshold, acquire the first pose information, the second pose information and the image.

9. The system according to claim 6, wherein the computing device is further configured to:
according to the first pose information and the second pose information, convert the second pose information into a converted pose information that is located in a vehicle body coordinate system; and
according to the converted pose information, determine the position of the target traffic light in the image.

10. The system according to claim 6, wherein the second pose information includes 3D position information and 3D posture information of the target traffic light relative to the global coordinate system.

11. A device for detecting a traffic light for a vehicle, comprising:
one or more processors; and
one or more memories configured to store a series of computer-executable instructions, wherein, when the series of computer-executable instructions are executed by the one or more processors, the one or more processors are caused to perform the method of any one of claims 1-5.

12. The device according to claim 11, wherein the device is mounted on the vehicle.

13. A non-transitory computer readable medium having a series of computer executable instructions stored thereon that, when executed by one or more computing devices, causing the one or more computing devices to perform the method of any one of claims 1-5.

## Patentansprüche

1. Ein Verfahren zum Erkennen einer Ampel für ein Fahrzeug, umfassend:
Erfassen einer ersten Poseinformation für das Fahrzeug von einem Positionierungsmodul, wobei die erste Poseinformation Positionsinformationen des Fahrzeugs relativ zu einem globalen Koordinatensystem in einer horizontalen Ebene und Ausrichtungsinformationen des Fahrzeugs relativ zu dem globalen Koordinatensystem in der horizontalen Ebene beinhaltet; Erfassen einer zweiten Poseinformation für eine Zielampel von einem hochauflösenden Kartenmodul, wobei die Zielampel gemäß mindestens einem von einer Fahrspur, in der sich das Fahrzeug befindet, oder einem Fahrplan des Fahrzeugs bestimmt wird; und Erfassen eines Bildes, das eine Umgebung vor dem Fahrzeug darstellt, von einer am Fahrzeug montierten Kamera;
Bestimmen einer Position der Zielampel im Bild gemäß der ersten Poseinformation und der zweiten Poseinformation; und
Durchführen einer Bildverarbeitung an einem Bildbereich des Bildes, der sich an der Position befindet, um eine Anzeige der Zielampel zu erkennen, wobei der Bildbereich auf die Position der Zielampel zentriert ist.

2. Das Verfahren nach Anspruch 1, weiter umfassend:
Bestimmen einer Größe des Bildbereichs gemäß der ersten Poseinformation und der zweiten Poseinformation.

3. Das Verfahren nach Anspruch 1, weiter umfassend:
Als Reaktion darauf, dass ein Abstand zwischen dem Fahrzeug und einer vorderen Kreuzung kleiner als ein Schwellenwert ist, Erfassen der ersten Poseinformation, der zweiten Poseinformation und des Bildes.

4. Das Verfahren nach Anspruch 1, wobei das Bestimmen der Position der Zielampel im Bild gemäß der ersten Poseinformation und der zweiten Poseinformation umfasst:
Gemäß der ersten Poseinformation und der zweiten Poseinformation, Umwandeln der zweiten Poseinformation in eine umgewandelte Poseinformation, die sich in einem Fahrzeugkörper-Koordinatensystem befindet; und
Gemäß der umgewandelten Poseinformation, Bestimmen der Position der Zielampel im Bild.

5. Das Verfahren nach Anspruch 1, wobei die zweite Poseinformation 3D-Positionsinformationen und 3D-Ausrichtungsinformationen der Zielampel relativ zu dem globalen Koordinatensystem beinhaltet.

6. Ein System zum Erkennen einer Ampel für ein Fahrzeug, umfassend:
ein Positionierungsmodul, konfiguriert zum Bereitstellen einer ersten Poseinformation für das Fahrzeug, wobei die erste Poseinformation Positionsinformationen des Fahrzeugs relativ zu einem globalen Koordinatensystem in einer horizontalen Ebene und Ausrichtungsinformationen des Fahrzeugs relativ zu dem globalen Koordinatensystem in der horizontalen Ebene beinhaltet;
ein hochauflösendes Kartenmodul, konfiguriert zum Bereitstellen einer zweiten Poseinformation für eine Zielampel, wobei die Zielampel gemäß mindestens einem von einer Fahrspur, in der sich das Fahrzeug befindet, oder einem Fahrplan des Fahrzeugs bestimmt wird;
eine am Fahrzeug montierte Kamera, konfiguriert zum Erfassen eines Bildes, das eine Umgebung vor dem Fahrzeug darstellt; und
eine Rechenvorrichtung, konfiguriert zum:
Erfassen der ersten Poseinformation vom Positionierungsmodul, Erfassen der zweiten Poseinformation vom hochauflösenden Kartenmodul und Erfassen des Bildes von der Kamera;
Bestimmen einer Position der Zielampel im Bild gemäß der ersten Poseinformation und der zweiten Poseinformation; und
Durchführen einer Bildverarbeitung an einem Bildbereich des Bildes, der sich an der Position befindet, um eine Anzeige der Zielampel zu erkennen, wobei der Bildbereich auf die Position der Zielampel zentriert ist.

7. Das System nach Anspruch 6, wobei die Rechenvorrichtung weiter konfiguriert ist zum:
Bestimmen einer Größe des Bildbereichs gemäß der ersten Poseinformation und der zweiten Poseinformation; und
Bestimmen eines Bereichs des Bildes, der auf die Position zentriert ist und die Größe als den Bildbereich aufweist.

8. Das System nach Anspruch 6, wobei die Rechenvorrichtung weiter konfiguriert ist zum:
Als Reaktion darauf, dass ein Abstand zwischen dem Fahrzeug und einer vorderen Kreuzung kleiner als ein Schwellenwert ist, Erfassen der ersten Poseinformation, der zweiten Poseinformation und des Bildes.

9. Das System nach Anspruch 6, wobei die Rechenvorrichtung weiter konfiguriert ist zum:
Gemäß der ersten Poseinformation und der zweiten Poseinformation, Umwandeln der zweiten Poseinformation in eine umgewandelte Poseinformation, die sich in einem Fahrzeugkörper-Koordinatensystem befindet; und
Gemäß der umgewandelten Poseinformation, Bestimmen der Position der Zielampel im Bild.

10. Das System nach Anspruch 6, wobei die zweite Poseinformation 3D-Positionsinformationen und 3D-Ausrichtungsinformationen der Zielampel relativ zu dem globalen Koordinatensystem beinhaltet.

11. Eine Vorrichtung zum Erkennen einer Ampel für ein Fahrzeug, umfassend:
einen oder mehrere Prozessoren; und
einen oder mehrere Speicher, konfiguriert zum Speichern einer Reihe von computerausführbaren Anweisungen,
wobei, wenn die Reihe von computerausführbaren Anweisungen durch den einen oder die mehreren Prozessoren ausgeführt wird, der eine oder die mehreren Prozessoren veranlasst werden, das Verfahren nach einem der Ansprüche 1-5 durchzuführen.

12. Die Vorrichtung nach Anspruch 11, wobei die Vorrichtung am Fahrzeug montiert ist.

13. Ein nicht-flüchtiges computerlesbares Medium mit einer darauf gespeicherten Reihe von computerausführbaren Anweisungen, die, wenn sie von einer oder mehreren Rechenvorrichtungen ausgeführt werden, die eine oder mehreren Rechenvorrichtungen veranlassen, das Verfahren nach einem der Ansprüche 1-5 durchzuführen.

## Revendications

1. Une méthode de détection d'un feu de circulation pour un véhicule, comprenant:
l'acquisition d'une première information de pose pour le véhicule à partir d'un module de positionnement, où la première information de pose comprend des informations de position du véhicule par rapport à un système de coordonnées global dans un plan horizontal et des informations de posture du véhicule par rapport au système de coordonnées global dans le plan horizontal; l'acquisition d'une deuxième information de pose pour un feu de circulation cible à partir d'un module de carte haute définition, où le feu de circulation cible est déterminé en fonction d'au moins l'un d'une voie dans laquelle le véhicule se trouve ou d'un plan de conduite du véhicule; et l'acquisition d'une image présentant un environnement devant le véhicule à partir d'une caméra montée sur le véhicule;
la détermination d'une position du feu de circulation cible dans l'image selon la première information de pose et la deuxième information de pose; et
l'exécution d'un traitement d'image sur une zone d'image de l'image qui est située à la position afin de détecter une indication du feu de circulation cible, où la zone d'image est centrée sur la position du feu de circulation cible.

2. La méthode selon la revendication 1, comprenant en outre:
la détermination d'une taille de la zone d'image selon la première information de pose et la deuxième information de pose.

3. La méthode selon la revendication 1, comprenant en outre:
en réponse à une distance entre le véhicule et une intersection avant étant inférieure à un seuil, l'acquisition de la première information de pose, de la deuxième information de pose et de l'image.

4. La méthode selon la revendication 1, où la détermination de la position du feu de circulation cible dans l'image selon la première information de pose et la deuxième information de pose comprend:
selon la première information de pose et la deuxième information de pose, la conversion de la deuxième information de pose en une information de pose convertie qui est située dans un système de coordonnées du corps du véhicule; et
selon l'information de pose convertie, la détermination de la position du feu de circulation cible dans l'image.

5. La méthode selon la revendication 1, où la deuxième information de pose comprend des informations de position 3D et des informations de posture 3D du feu de circulation cible par rapport au système de coordonnées global.

6. Un système de détection d'un feu de circulation pour un véhicule, comprenant:
un module de positionnement configuré pour fournir une première information de pose pour le véhicule, où la première information de pose comprend des informations de position du véhicule par rapport à un système de coordonnées global dans un plan horizontal et des informations de posture du véhicule par rapport au système de coordonnées global dans le plan horizontal;
un module de carte haute définition configuré pour fournir une deuxième information de pose pour un feu de circulation cible, où le feu de circulation cible est déterminé en fonction d'au moins l'un d'une voie dans laquelle le véhicule se trouve ou d'un plan de conduite du véhicule;
une caméra montée sur le véhicule et configurée pour acquérir une image présentant un environnement devant le véhicule; et
un dispositif de calcul configuré pour:
acquérir la première information de pose à partir du module de positionnement,
acquérir la deuxième information de pose à partir du module de carte haute définition, et acquérir l'image à partir de la caméra;
déterminer une position du feu de circulation cible dans l'image selon la première information de pose et la deuxième information de pose; et
effectuer un traitement d'image sur une zone d'image de l'image qui est située à la position afin de détecter une indication du feu de circulation cible, où la zone d'image est centrée sur la position du feu de circulation cible.

7. Le système selon la revendication 6, où le dispositif de calcul est en outre configuré pour:
déterminer une taille de la zone d'image selon la première information de pose et la deuxième information de pose; et
déterminer une zone de l'image qui est centrée sur la position et a la taille comme zone d'image.

8. Le système selon la revendication 6, où le dispositif de calcul est en outre configuré pour:
en réponse à une distance entre le véhicule et une intersection avant étant inférieure à un seuil, acquérir la première information de pose, la deuxième information de pose et l'image.

9. Le système selon la revendication 6, où le dispositif de calcul est en outre configuré pour:
selon la première information de pose et la deuxième information de pose, convertir la deuxième information de pose en une information de pose convertie qui est située dans un système de coordonnées du corps du véhicule; et
selon l'information de pose convertie, déterminer la position du feu de circulation cible dans l'image.

10. Le système selon la revendication 6, où la deuxième information de pose comprend des informations de position 3D et des informations de posture 3D du feu de circulation cible par rapport au système de coordonnées global.

11. Un dispositif de détection d'un feu de circulation pour un véhicule, comprenant:
un ou plusieurs processeurs; et
une ou plusieurs mémoires configurées pour stocker une série d'instructions exécutables par ordinateur,
où, lorsque la série d'instructions exécutables par ordinateur est exécutée par le ou les processeurs, le ou les processeurs sont amenés à exécuter la méthode selon l'une quelconque des revendications 1 à 5.

12. Le dispositif selon la revendication 11, où le dispositif est monté sur le véhicule.

13. Un support non transitoire lisible par ordinateur ayant une série d'instructions exécutables par ordinateur stockées dessus qui, lorsqu'elles sont exécutées par un ou plusieurs dispositifs informatiques, amènent le ou les dispositifs informatiques à exécuter la méthode selon l'une quelconque des revendications 1 à 5.
